(19) **Europäisches Patentamt**

**European Patent Office**

**Office européen des brevets**

(11) Veröffentlichungsnummer: **0 211 967**
**A1**

# (12) EUROPÄISCHE PATENTANMELDUNG

(21) Anmeldenummer: **85109503.4**

(22) Anmeldetag: **29.07.85**

(51) Int. Cl.⁴: **A01B 49/00 , A01B 63/00**

(43) Veröffentlichungstag der Anmeldung:
**04.03.87 Patentblatt 87/10**

(84) Benannte Vertragsstaaten:
**DE FR GB IT NL**

(71) Anmelder: **Rabewerk Heinrich Clausing**

**D-4515 Bad Essen 1(DE)**

(72) Erfinder: **Bohnenkamp, Wilfried, Dipl.-Ing.**
**Klusring 25**
**D-4515 Bad Essen 1(DE)**

(74) Vertreter: **Schlee, Richard et al**
**Patentanwälte Dipl.-Ing. R. Schlee Dipl.-Ing.**
**A. Missling Bismarckstrasse 43**
**D-6300 Giessen 1(DE)**

(54) **Kombinationsgerät für die Bodenbearbeitung in der Landwirtschaft.**

(57) Das Kombinationsgerät (K₁) besteht aus einem Vorgerät (1), einem zweiten Gerät (2), einem Karren (3) und einem Nachgerät (4) und ist insbesondere für die Bereitung eines Saatbettes und das Einlegen von Saatgut in den Boden bestimmt. In der Transportstellung des Gerätes (K₁) ist dieses an seinem vorderen Ende auf einem Schlepper und hinter dem zweiten Gerät auf dem Karren (3) abgestützt. Das Anheben in die Transportstellung erfolgt mittels der Hebehydraulik des Schleppers, eines Hydraulikzylinders (62) zwischen zweitem Gerät (2) und Karren - (3) und eventuell eines weiteren Hydraulikzylinders - (52) zwischen Karren (3) und Nachgerät (4).

Die Konstruktion ist relativ leicht, da der Karren - (3) ein geringeres Gewicht hat als eine Rahmenkonstruktion, an der die Einzelgeräte aufgehängt sind.

EP 0 211 967 A1

Fig.1

## Kombinationsgerät für die Bodenbearbeitung in der Landwirtschaft

Die Erfindung bezieht sich auf ein Kombinationsgerät für die Bodenbearbeitung in der Landwirtschaft, mit einem Vorgerät, z.B. einem Bodenaufreißgerät, mit Kuppeleinrichtungen zum Anbau an die Hebevorrichtung eines Schleppers, einem mit dem Vorgerät über ein Dreipunktgestänge verbundenes zweites Gerät mit aktiv angetriebenen Werkzeugen, die vom Schlepper über eine Gelenkwelle antreibbar sind, insbesondere Saatbereitungsgerät in Form einer Bodenfräse oder Kreiselegge, und eine auf dem Boden mittels eines Nachlaufrades abstützbare Tragvorrichtung zum Tragen des Vorgerätes und des zweiten Gerätes während des Transportes.

Kombinationsgeräte haben den Vorteil, daß mit einem einmaligen Befahren eines Ackers mehrere Arbeitsgänge gleichzeitig ausgeführt werden können. Dadurch reduziert man die unerwünschte Verfestigung des Bodens durch die Schlepperreifen so weit wie möglich. Gerätekombinationen können jedoch nicht immer eingesetzt werden, da ihre Einsatzmöglichkeit von der Beschaffenheit des Schleppers, der Bodenbeschaffenheit und der gewünschten Kultur, die durch die Bodenbearbeitung vorbereitet werden soll, abhängig ist. Es ist deshalb wünschenswert, daß die Einzelgeräte der Gerätekombination auch für sich alleine benutzt werden können.

Bei einem bekannten Gerät der eingangs genannten Art (DE-OS 30 33 848) ist mit dem Vorgerät ein Rahmen verbunden, an dem Stützräder gelagert sind, die mittels eines Hydraulikzylinders gehoben und gesenkt werden können. Der Rahmen hat an seinem hinteren Ende Kupplungsstellen für den Anbau eines Nachgerätes, nämlich einer Sämaschine. Die bekannte Konstruktion ist relativ schwer, wobei das Gewicht des notwendigerweise kräftigen und langen Rahmens erheblich zum Gesamtgewicht beiträgt.

Der Erfindung liegt die Aufgabe zugrunde, ein Kombinationsgerät der eingangs genannten Art so auszubilden, daß die Transportfähigkeit bei geringerem Gewicht des Gesamtgerätes erreicht wird.

Diese Aufgabe wird nach der Erfindung dadurch gelöst, daß die Tragvorrichtung ein hinter dem zweiten Gerät angeordneter, mittels eines Dreipunktgestänges lösbar mit diesem verbundener Karren ist, an dem sich Kupplungsstellen für den Anschluß eines Nachgerätes, insbesondere einer Sämaschine, befinden, wobei das Dreipunktgestänge hydraulisch betätigbar ist.

Ein an das zweite Gerät ankuppelbarer Karren hat im Vergleich mit einem langen Rahmen und daran angeordneten Rädern ein verhältnismäßig niedriges Gewicht, sodaß auch das Gesamtgewicht des Kombinationsgerätes niedriger ist als bei der bekannten Konstruktion. Da der Karren lösbar mit dem zweiten Gerät verbunden ist, kann dieses auch für sich alleine als Einzelgerät verwendet werden. Wenn der Schlepper ein hohes Gewicht hat, ist es auch denkbar, mit dem Vorgerät und dem zweiten Gerät ohne einen nachlaufenden Karren zu arbeiten, nämlich dann, wenn der Schlepper genügend schwer ist, um die Kombination aus Vorgerät und zweitem Gerät anzuheben, ohne daß die Gefahr besteht, daß der Schlepper über seine Hinterachse nach hinten abkippt. Kupplungsstellen für ein Nachgerät am Karren ermöglichen eine Kombination aus drei Geräten, z.B. einem Grubber als Vorgerät, einer Kreiselegge oder einer Bodenfräse als zweitem Gerät und einer Sämaschine als drittem Gerät, wodurch ein Kombinationsgerät geschaffen ist, das sehr gut für die Bereitung eines Saatbettes und das gleichzeitige Säen geeignet ist. An das hydraulisch betätigbare Dreipunktgestänge, mit dem der Karren angebaut ist, kann auch unmittelbar ein Nachgerät, z.B. eine Sämaschine, angebaut werden.

Vorteilhafterweise wird auch zur Verbindung des Vordergerätes mit dem Schlepper ein Dreipunktgestänge benutzt (Anspruch 2). Auch die Verbindung zwischen dem Karren und dem Nachgerät ist vorzugsweise als Dreipunktgestänge ausgebildet (Anspruch 3). Auch das zweite Gerät ist mit dem Vorgerät vorteilhafterweise über ein Dreipunktgestänge verbunden (Anspruch 4). Dreipunktgestänge sind die übliche Verbindungsart zwischen Gerät und Schlepper, so daß dann, wenn alle drei Geräte (Vorgerät, zweites Gerät und Nachgerät) und der Karren mit dem Schlepper bzw. untereinander durch Dreipunktgestänge verbunden sind, auch jedes Gerät für sich alleine mit einem Schlepper verbunden werden kann, wenn, wie dies vorgesehen ist, alle Dreipunktgestänge genormt und damit die Anschlußstellen an den Einzelgeräten mit dem Dreipunktgestänge des Schleppers kompatibel sind. Auch die Einzelgeräte untereinander können beliebig kombiniert werden, wenn sie alle mit zueinander passenden Dreipunktgestängen bzw. Anschlußstellen für solche Gestänge ausgerüstet sind, wie dies vorzugsweise der Fall sein soll.

Durch die Verwendung eines Anschlages zwischen zweitem Gerät und Vorgerät gemäß Anspruch 5 wird auf einfache Weise erreicht, daß das zweite Gerät auch vom Schlepper her unterstützt wird, wenn das Vorgerät von der Hebehydraulik des Schleppers angehoben wird. Der Anschlag kann hierbei als Stellschraube ausgebildet sein - (Anspruch 6). Der Anschlag kann auch von einer Wirkstellung in eine Ruhestellung bring bar sein - (Anspruch 7), wodurch eine freie Beweglichkeit der Geräteteile untereinander in der Arbeitsstellung gewährleistet ist.

Ein weiterer Hydraulikzylinder kann zwischen Karren und Nachgerät angeordnet sein (Anspruch 8), wodurch das Nachgerät relativ zum Karren anhebbar ist. Dieser Hydraulikzylinder ist vorzugsweise in ein Dreipunktgestänge eingebaut - (Anspruch 9). Hierbei ist vorzugsweise gemäß Anspruch 10 eine Folgeschaltung vorgesehen, die bewirkt, daß zuerst das zweite Gerät und danach das Nachgerät relativ zum Karren angehoben wird.

Die Räder des Karrens können in der Arbeitsstellung anhebbar sein (Anspruch 11), was vorteilhaft sein kann, wenn ein Nachgerät nicht montiert ist.

Das Nachgerät kann auch durch mechanische Kupplung mit dem zweiten Gerät anhebbar sein - (Anspruch 12). In diesem Fall ist ein eigener Hydraulikzylinder für die Anhebung des Nachgerätes nicht erforderlich.

Die Auslegung eines Gelenkviereckes, mit dem das zweite Gerät mit dem Vorgerät verbunden ist, derart, daß sein Pol etwa am vorderen Ende des Gestells des Vorgerätes liegt (Anspruch 13), hat den Vorteil, daß das zweite Gerät eine vorteilhafte Bewegungscharakteristik für den Übergang von der Arbeitsstellung in die Transportstellung hat. Ein - schwenkbarer Turm am Vorgerät und seine Abstützung mittels einer eine lose enthaltende Strebe gemäß Anspruch 14 ist ein vorteilhaftes Mittel, um einerseits das freie Spiel der Einzelgeräte während der Arbeit zuzulassen und andererseits in der Arbeitsstellung eine starre Kupplung der Geräte untereinander herzustellen. Dem gleichen Zweck dient ein Oberlenker mit einer Lose gemäß Anspruch 15 zwischen Vorgerät und zweitem Gerät.

Gemäß Anspruch 16 wird Schutz auch beansprucht für ein Gerät, an das ein Karren über ein hydraulisch betätigbares Dreipunktgestänge angebaut ist bzw. angebaut werden kann, auch wenn dieses Gerät nicht mit anderen Geräteteilen kombiniert ist. Der Vorteil einer solchen Konstruktion besteht darin, daß bei der Benutzung des Gerätes als Anbaugerät, d.h. ohne Karren, an das Dreipunktgestänge ein Nachgerät, z.B. eine Sämaschine, angebaut werden kann, die für Transportzwecke mittels des Dreipunktgestänges angehoben werden kann. Andererseits kann ein solches Gerät derart benutzt werden, daß das Nachgerät an den Karren angebaut wird.

In der Zeichnung sind Ausführungsbeispiele der Erfindung dargestellt. Es zeigen:

Fig. 1 eine Seitenansicht eines Kombinationsgerätes in seiner Arbeitsstellung entsprechend dem Pfeil I in Fig. 2,

Fig. 2 eine Draufsicht auf das Gerät in Richtung des Pfeiles II in Fig. 1,

Fig. 3 eine Seitenansicht des Gerätes nach den Fig. 1 und 2 in der Transportstellung,

Fig. 4 eine Seitenansicht eines Kombinationsgerätes gemäß einer zweiten Ausführungsform der Erfindung in der Arbeitsstellung und

Fig. 5 eine Seitenansicht des Gerätes nach Fig. 4 in der Transportstellung des Gerätes.

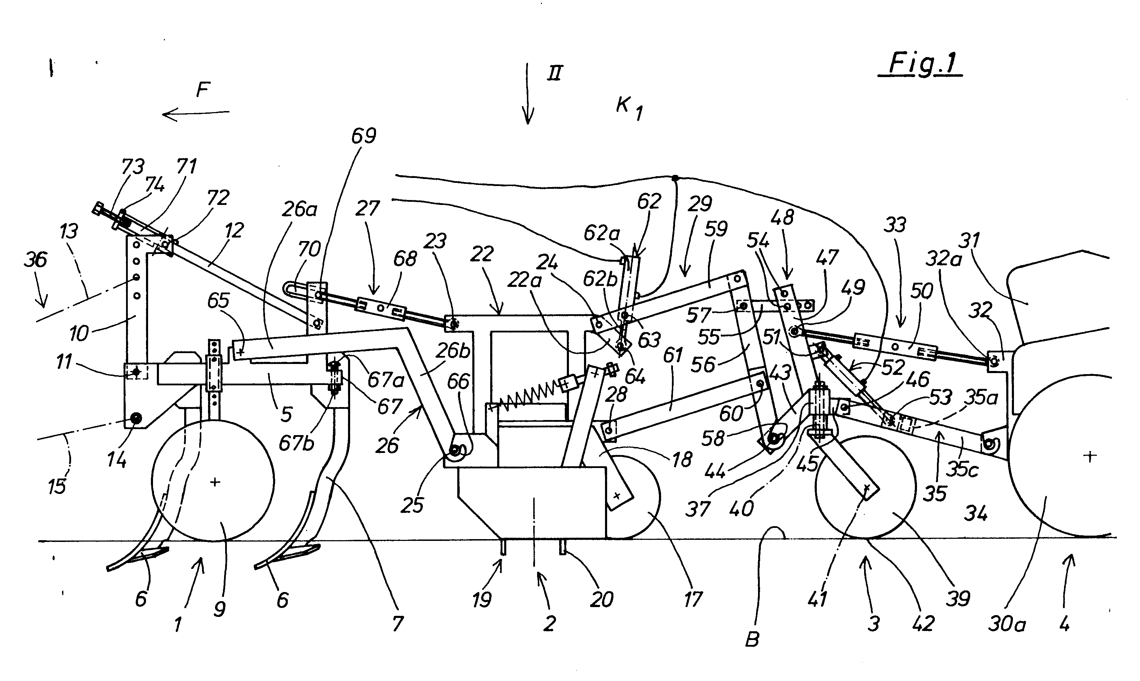

Das Kombinationsgerät K, nach den Fig. 1 bis 3 besteht aus einem Vorgerät 1, einem zweiten Gerät 2, einem Karren 3 und einem Nachgerät 4. Das Vorgerät ist als Grubber, das zweite Gerät als Kreiselegge und das Nachgerät 4 als Sämaschine ausgebildet. Die Geräte 1, 2 und 4 sind in ihrer Grundkonzeption von konventioneller Beschaffenheit und sollen deshalb in ihrem grundsätzlichen Aufbau nur kurz beschrieben werden.

Das Vorgerät 1 hat ein Gestell 5, an dem Werkzeuge 6 über Stiele 7 befestigt sind. Seitlich am Gestell befinden sich Stützräder 8, 9, die relativ zum Gestell 5 höhenverstellbar sind, wodurch sich die Arbeitstiefe des Vorgerätes 1 einstellen läßt. Am Gestell 5 ist ein Turm 10 gelagert, der um eine Achse 11 schwenkbar und gegenüber dem Gestell 5 durch eine Strebe 12 abgestützt ist. Am Turm 10 ist der obere Lenker 13 eines Schlepper-Dreipunktgestänges befestigbar. Ferner befinden sich am Gestell Zapfen 14 für den Angriff der unteren Lenker 15 des Schlepper-Dreipunktgestänges.

Das zweite Gerät, nämlich die Kreiselegge, hat einen Getriebekasten 16, der zugleich den Hauptträger des Maschinengestells bildet. Hinter dem Getriebekasten befindet sich an der Kreiselegge eine Nachlaufwalze 17, die an Schwenkarmen 18 gelagert ist, die relativ zum Getriebekasten höhenverstellbar und in ausgewählten Höhenlagen feststellbar ist. Im Getriebekasten sind mehrere Kreisel 19 gelagert. Die Kreiselwellen verlaufen senkrecht und tragen an ihren unteren Enden Werkzeugträger, an denen nach unten ragende Werkzeuge 20 befestigt sind. Innerhalb des Getriebekastens trägt jede Kreiselwelle ein Stirnzahnrad 21, das mit dem Stirnzahnrad eines benachbarten Kreisels kämmt. Eine etwa in der Mitte des Getriebekastens liegende Kreiselwelle wird über ein Winkelgetriebe vom Schlepper aus angetrieben, wobei sich zwischen einer Zapfwelle am Schlepper und dem Winkelgetriebe eine Gelenkwelle erstreckt. Das Winkelgetriebe und die Gelenk welle sind in der Zeichnung nicht dargestellt.

Der Getriebekasten hat einen Aufbau 22, an dem sich mehrere Anschlußstellen befinden. Vorne am Aufbau 22 befindet sich eine Anschlußstelle 23 für den Oberlenker eines Dreipunktgestänges, mit dem das Vorgerät 1 mit der Kreiselegge 2 verbunden ist. Unterhalb der Anschlußstelle 23 befinden sich Zapfen 25, an denen Unterlenker 26 eines insgesamt mit 27 bezeichneten Dreipunktgestänges angreifen, mit dem die Kreiselegge 2 mit dem Vorgerät 1 verbunden ist. Unterhalb der Anschlußstelle 24 befinden sich Anschlußstellen 28 für den Anschluß eines ingesamt mit 29 bezeichneten Dreipunktgestänges, mit dem der Karren 3 mit dem zweiten Gerät verbunden ist.

Die Sämaschine 4 hat seitlich angeordnete Laufräder 30a, 30b, mit denen die Sämaschine auf dem Boden abgestützt ist. Die Sämaschine hat in bekannter Weise einen Kasten 31 für die Aufnahme des Saatgutes, von dem nicht dargestellte Särohre ausgehen. Am Gestell 32 der Sämaschine 4 befindet sich eine obere Anlenkstelle 32a für ein insgesamt mit 33 bezeichnetes Dreipunktgestänge, mit dem die Sämaschine 4 mit dem Karren 3 verbunden ist. Unterhalb der Anlenkstelle 32 befinden sich Zapfen 34 für den Angriff der Unterlenker des Dreipunktgestänges 33.

Jedes der beschriebenen Geräte 1, 2, 4 kann für sich an das Dreipunktgestänge 36 eines Schleppers angekuppelt werden, da die jeweiligen Anlenkungsstellen am Gerät mit dem Schlepper-Dreipunktgestänge 36 kompatibel sind.

Der Karren 3 hat eine Traverse 37, an deren Ende Nachlaufräder 38, 39 gelagert sind. Die Nachlaufräder sind um vertikale Achsen 40 - schwenkbar und um horizontale Achsen 41 drehbar. Die Auflagepunkte 42 der Nachlaufräder auf dem Boden B liegen naturgemäß unterhalb der Drehachsen 41 und, in Fahrt richtung F gesehen, hinter den Schwenkachsen 40, so daß sich die Laufräder infolge der Bodenkräfte selbttätig in Fahrtrichtung einstellen.

Mit der Traverse sind schräg nach unten ragende Arme 43 verschweißt, an denen sich Zapfen 44 befinden, an denen der Karren mit dem Dreipunktgestänge 29 gekuppelt wird. Weiter sind mit der Traverse 37 Ansätze 45 verschweißt, an denen sich Anlenkungsstellen 46 für die Unterlenker des Dreipunktgestänges 33 befinden. Mit der Traverse 37 ist weiterhin ein Turm 47 verschweißt, an dem sich verschiedene, noch zu beschreibende Anlenkungsstellen befinden. Die Traverse 37 mit den Armen 43, den Ansätzen 45 und dem Turm 47 bilden ein insgesamt mit 48 bezeichnetes Karrengestell.

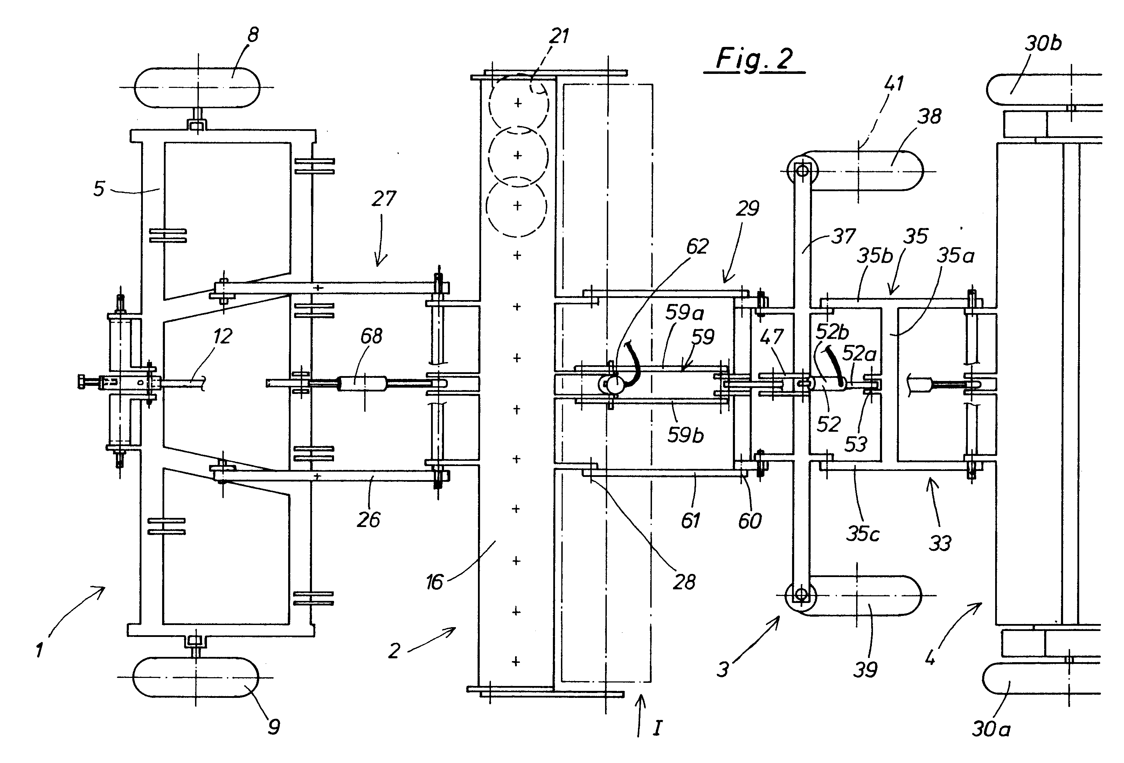

Am Turm 47 greift an einer Anlenkungsstelle 49 der als Spannschloß ausgebildete obere Lenker 50 des Dreipunktgestänges 33 an. Am Turm 47 ist ferner eine Anlenkungsstelle 51 für einen einfachwirkenden Hydraulikzylinder 52 vorgesehen, der mit seinem anderen Ende an einer Anlenkungsstelle 53 an den Unterlenkern 35 des Dreipunktgestänges 33 angreift. Wie man aus Fig. 2 ersehen kann, haben die Unterlenker 35 eine Traverse 35a, die die beiden parallelen Lenker 35b, 35e miteinander verbindet und an der sich die Anlenkungsstelle 53 befindet.

Am Turm 47 befinden sich ferner mehrere Anlenkungsstellen 54 für die Anlenkung einer Strebe 55, mit der eine Koppel 56 des Dreipunktgestänges gegenüber dem Turm 47 abstützbar ist. Die Strebe 55 ist mit ihrem anderen Ende an einer Anlenkungsstelle 57 der Koppel 56 angelenkt. Die Koppel 56 hat an ihren unteren Enden nach oben offene Aufnahmevertiefung 58, mit denen die Zapfen 44 am Karren untergriffen werden können.

An der Koppel 56 ist ein Oberlenker 59 des Dreipunktgestänges 29 angelenkt, der mit seinem linken Ende an der Anschlußstelle 24 des Aufbaues 22 angelenkt ist. Ferner befinden sich an der Koppel 56 Anlenkungsstellen 60 für die Unterlenker 61 des Dreipunktgestänges 29.

Der Oberlenker 59 besteht aus zwei parallelen Stäben 59a, 59b (siehe Fig. 2). Zwischen die Stäbe 59a, 59b greift ein doppeltwirkender Hydraulikzylinder 62 ein. Der Zylinderteil 62a ist mittels eines Gelenkes 63 am Oberlenker 59 angelenkt, während seine Kolbenstange 62b bei 64 am Aufbau 22 der Kreiselegge 2 angelenkt ist, nämlich am Ende eines abwärts ragenden Teiles 22a des Aufbaues 22.

Die Unterlenker 26 des Dreipunktgestänges 27 sind an Anlenkungsstellen 65 am Gestell 5 des Grubbers 1 angelenkt. Sie haben an ihren Enden Aufnahmevertiefungen 66 für die Zapfen 25, die sich am Gestell der Kreiselegge befinden. Die Unterlenker 26 sind abgebogen und haben einen horizontal bzw. leicht ansteigend verlaufenden Teil 26a und einen abfallenden Teil 26b. Der horizontale Teil 26 ist zum Zusammenwirken mit dem Kopf 67a einer Anschlagschraube 67 bestimmt, die sich am Gestell 5 des Grubbers befindet. Die Anschlagschraube 67 ist im Gestell 5 verschraubbar und mittels einer Mutter 67 bei verschiedenen Höhenlagen des Kopfes 67a arretierbar.

Der als Spannschloß ausgebildete Oberlenker 68 des Dreipunktgestänges 27 ist mit seinem linken Ende, wie bereits angegeben, an den Aufbau 22 der Kreiselegge 2 angelenkt, während sein linkes Ende am Gestell 5 des Grubbers 1 angreifen kann, nämlich an einem Angriffspunkt 69. Der Oberlenker 68 enthält eine Lose, die als Schlitz 70 ausgebildet ist, der eine Bewegung des linken Endes des Oberlenkers 27 relativ zum Angriffspunkt 69 gestatet, wobei sich der Schlitz längs eines Bolzens bewegt, der den Angriffspunkt 69 definiert.

Auch die Strebe 12, mit der der Turm 10 gegenüber dem Gestell 5 des Grubbers abgestützt ist, enthält einen Schlitz 71, der sich längs eines Bolzens 72 bewegen kann, an dem die Strebe 12 angreifen kann. Die wirksame Länge des Schlitzes 71 ist mit einer Stellschraube 73 einstellbar, die sich in einer Endplatte 74 verschrauben läßt, die den Schlitz 71 nach links hin abschließt.

Die Gerätekombination arbeitet wie folgt. In der Arbeitsstellung, die in den Fig. 1 und 2 dargestellt ist, liegt der Bolzen 72 am unteren rechten Ende des Schlitzes 71 der Strebe 12 an und die Laufräder 8, 9 des Grubbers liegen auf dem Boden B auf. Über die Strebe 12 kann vom Schlepper her Druck auf das Gestell 5 ausgeübt werden, indem der Oberlenker 13 des Schlepper-Dreipunktgestänges einen nach hinten gerichteten Druck ausübt. Die Kreiselegge 2 kann sich relativ zum Grubber 1 frei bewegen. Die Eingriffstiefe ihrer Werkzeuge 19 wird durch die Nachlaufwalze 17 bestimmt, die relativ zum Getriebekasten 16 entsprechend eingestellt wird. Der Karren 48 rollt mit seinen Nachlaufrädern 38, 39 auf dem Boden B und zieht die Sämaschine 4, die über ihre Räder 30a, 30b auf dem Boden B abgestützt ist.

Bei der Fahrt über den Acker bewirken die Werkzeuge 6 des Grubbers eine Vorlockerung des Bodens. Der Boden wird durch die Egge 2 gekrümelt und durch die Nachlaufwalze 17 festgedrückt, wodurch ein Saatbett bereitet wird. In dieses Saatbett wird mit der Sämaschine 4 Saatgut eingelegt. Es werden also drei Bearbeitungsgänge gleichzeitig ausgeführt, so daß im Vergleich mit der separaten Durchführung jedes Arbeitsganges statt eines dreimaligen Befahrens des Ackers ein nur einmaliges Befahren erforderlich ist.

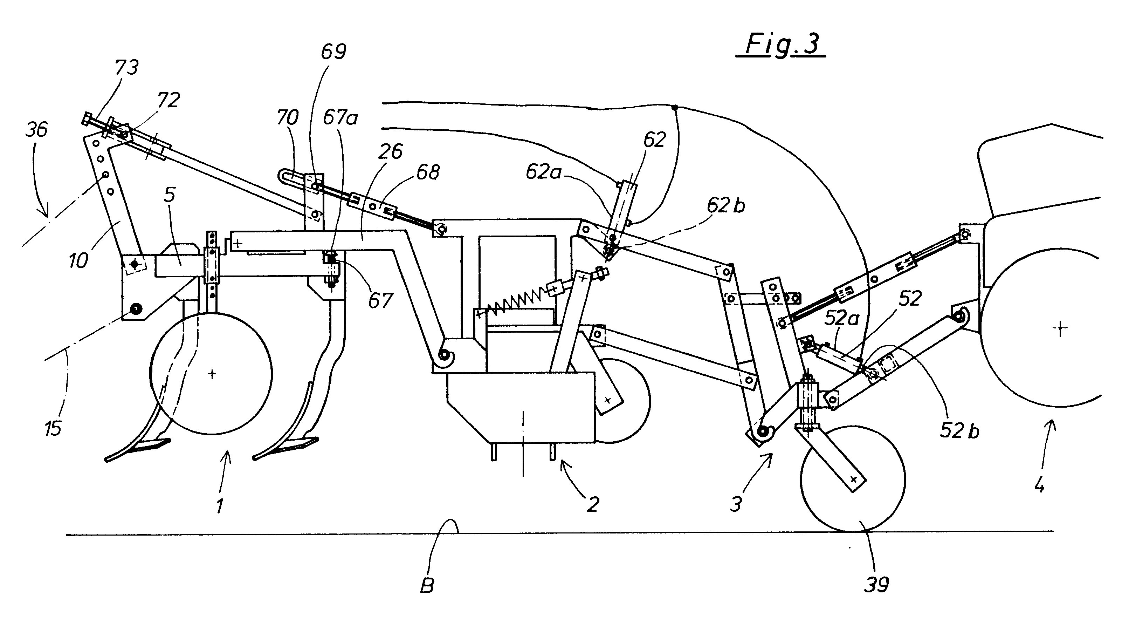

Der Übergang in die Transportstellung läuft folgendermaßen ab. Mit der hydraulischen Hebevorrichtung des Schleppers werden die Unterlenker 15 des Schlepper-Dreipunktgestänges angehoben, wobei der Grubber 1 vom Boden B abgehoben wird. Während des Anhebens nimmt der Turm 10 die aus Fig. 3 ersichtliche Lage relativ zum Gestell 5 ein. Hierbei ist zunächst der Bolzen 72 an das Ende der Anschlagschraube 73 herangewandert und dort zur Anlage gekommen. Während dieses Vorganges hat sich der Grubber 1 zunächst - schräggestellt und hat im Verlaufe des weiteren Aushebens wieder die horizontale Lage nach Fig. 3 eingenommen. Schon kurz nach dem Anheben des hinteren Endes des Gestelles 5 ist die Anschlagschraube 67 mit ihrem Kopf 67a beiderseits der Längsmittelachse des Gerätes an dem Unterlenker 26 zur Anlage gekommen, wonach die Kreiselegge 2 durch die Hebekraft des Schleppers mitgenommen wird, wobei diese Anhebebewegung noch durch den Hydraulikzylinder 62 unterstützt werden kann.

Gleichzeitig oder mit zeitlicher Verzögerung werden auch die Hydraulikzylinder 62, 52 mit Drucköl beaufschlagt, vorzugsweise mit einer Folgesteuerung derart, daß zuerst der Hydraulikzylinder 62 und danach erst der Hydraulikzylinder 52 beaufschlagt wird. Bei der Beaufschlagung des Hydraulikzylinders 62 wird seine Kolbenstange 62b in den Zylinderteil 62a eingezogen, wodurch die Kreiselegge gegenüber dem Karren 3 nach oben gedrückt wird. In der vollendeten Transportstellung liegt der Oberlenker 68 mit dem rechten Ende seines Schlitzes 70 am Angriffspunkt 69 an. Die Gesamtheit aus dem Vorgerät 1 und dem zweiten Gerät 2 bildet dann sozusagen einen starren Brückenträger, der sich mit seinem linken Ende auf dem Schlepper und mit seinem rechten Ende auf dem Karren 3 und über dessen Nachlaufräder 38, 39 auf dem Boden B abstützt. Das Nachgerät 4 ist dann ebenfalls vom Boden abgehoben, was dadurch bewirkt wurde, daß die Kolbenstange 52b des Hydraulikzylinders 52 in den Zylinderteil 52a eingezogen wurde. Das gesamte Kombinationsgerät wird in dieser Transportstellung wie ein Aufsattelgerät gezogen.

Der Übergang von der Transportstellung in die Arbeitsstellung wird in einem Ablauf bewerkstelligt, der zeitlich entgegengesetzt zu dem Ablauf beim Übergang von der Arbeitsstellung in die Transportstellung ist.

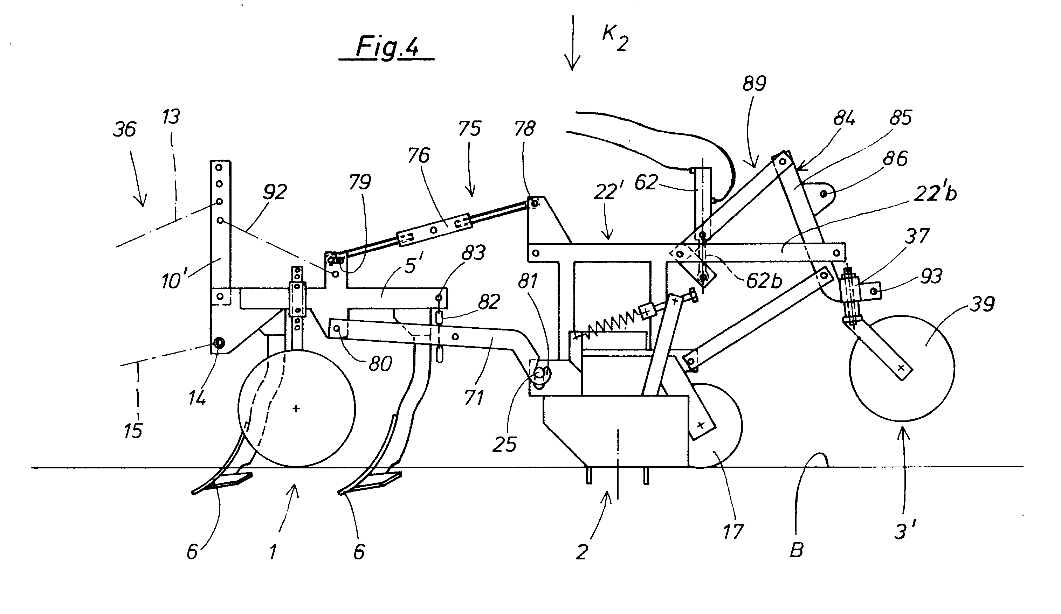

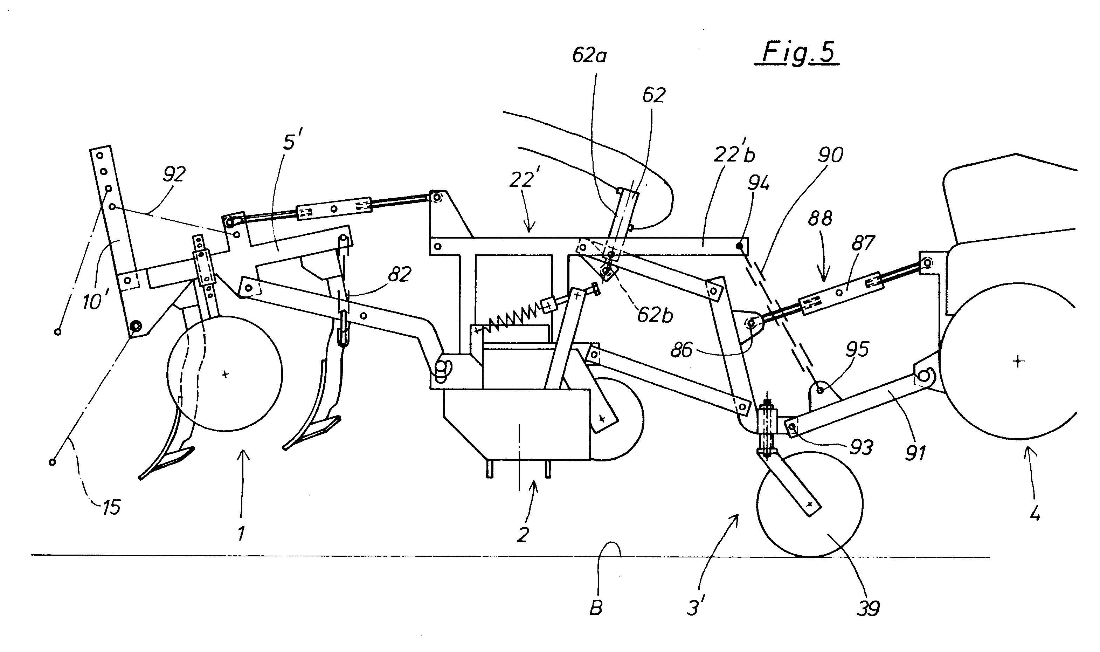

Das Kombinationsgerät $K_2$ nach den Fig. 4 und 5 hat ebenfalls ein Vorgerät 1 in Form eines Grubbers, ein zweites Gerät 2 in Form einer Kreiselegge, einen Karren 3' und eventuell (in Fig. 5 dargestellt, in Fig. 4 nicht dargestellt) ein Nachgerät 4 in Form einer Sämaschine. Die Einzelgeräte 1, 2 und 4 sind gleich ausgebildet wie bei der Ausführungsform nach den Fig. 1 bis 3 und sollen deshalb im folgenden nicht mehr beschrieben werden. Zum Teil abweichend sind die Verbindungen zwischen den Geräteteilen untereinander ausgebildet. Diese Verbindungen sollen deshalb nachfolgend im einzelnen betrachtet werden.

Das Vorgerät 1 ist mit dem zweiten Gerät über ein Dreipunktgestänge 75 verbunden, das einen Oberlenker 76 und zwei Unterlenker 77 aufweist. Der Oberlenker 76 ist an einem Anlenkungspunkt 78 mit einem Aufbau 22' der Kreiselegge unverschieblich verbunden, während sein vorderes Ende am Gestell 5' des Grubbers 1 verschiebbar angelenkt ist, zu welchem Zweck sich am Gestell 5' ein Langloch 79 befindet.Der Pol des Dreipunktgestänges 75 ist durch den gedachten Schnittpunkt des Oberlenkers 76 mit den Unterlenkern 77 gebildet (in der Seitenansicht gesehen), wobei der Unterlenker kinematisch gesehen durch die Verbindungslinie zwischen den Anlenkungsstellen 25 und 80 definiert ist. Der Pol liegt ungefähr am vorderen Ende des Gestells 5'.

Jeder der beiden Unterlenker 77 ist am Gestell 5' des Grubbers 1 an einer Anlenkungsstelle 80 angelenkt und hat an seinem rechten Ende eine Aufnahmevertiefung 81 für die Aufnahme von Zapfen 25, die an der Kreiselegge 2 vorgesehen sind. Jedem Unterlenker 77 ist eine Anschlagkette 82 zugeordnet, die an einem Befestigungspunkt 83 des Gestells 5' befestigt ist und nach einer gewissen Entfernung des Lenkers 77 vom Gestell 5' gespannt wird und danach eine weitere Entfernung des Lenkers nicht mehr zuläßt. Die Anschlagkette 82 wird nur dann benutzt, wenn das Gerät als Anbaugerät, also ohne Karren, verwendet wird.

Das Gestell 22' hat einen weit nach hinten ragenden Balken 22'b, der in noch zu beschreibender Art und Weise zur Anhebung des Nachgerätes 4 dient.

Der Karren 3' hat ein Gestell 84 mit einer Traverse 37, an der sich Nachlaufräder 38, 39 befinden. Insoweit besteht also Übereinstimmung mit dem Karren 3 nach den Fig. 1 bis 3. Von der Traverse 37 erhebt sich ein Turm 85 mit einer Angriffsstelle 86 für den Oberlenker 87 eines Dreipunktgestänges 88. Der Karren 3' ist über ein Dreipunktgestänge 89 mit der Kreiselegge 2 verbunden, und zwar in gleicher Weise wie der Karren 3 nach den Fig. 1 bis 3, wobei ebenfalls ein Hydraulikzylinder 62 vorgesehen ist. Es fehlt bei der Ausführungsform nach den Fig. 4 und 5 eine besondere Koppel für das Dreipunktgestänge 89. Diese Koppel ist durch das Gestell 84 des Karrens selber gebildet.

Wie Fig. 5 zeigt, kann an dem Balken 22'b des Aufbaues 22' ein Zugglied, z.B. eine Kette 90, angehängt werden, die mit ihrem anderen Ende am Dreipunktgestänge 88, nämlich an dessen unteren Lenkern 91, angreift.

Am Gestells 5' des Grubbers ist ein Turm 10' angeordnet, der mittels einer Strebe 92 gegenüber dem Gestell 5' abgestrebt ist. Die Strebe 92 ist nicht längenveränderlich, so daß der Turm 10' starr am Gestell 5' befestigt ist. Am Vorgerät 1 greift wieder ein Schlepper-Dreipunktgestänge 36 an, dessen oberer Lenker 13 am Turm 10' und dessen unterer Lenker 15 an Zapfen 14 des Gestells 5' befestigt ist bzw. sind.

Das Kombinationsgerät K₂ arbeitet wie folgt. In der Arbeitsstellung nach Fig. 4 werden die Werkzeuge 6 des Grubbers 1 durch den Oberlenker 13 des Schlepper-Dreipunktgestänges 36, der dann auf Druck beansprucht ist, im Boden gehalten. Die Kreiselegge 2 kann sich relativ zum Grubber 1 frei bewegen. Wenn das Kombinationsgerät ohne Nachgerät 4 verwendet werden soll, wird der Karren 3' vorzugsweise vom Boden B abgehoben, wobei die Kolbenstange 62b des Hydraulikzylinders 62 ausgefahren ist und dadurch das Dreipunktgestänge 89 nach oben gezogen ist. Die Kreiselegge kann sich frei auf den Boden einstellen, wobei die Arbeitstiefe durch die Nachlaufwalze 17 bestimmt wird.

Das Gerät kann alternativ auch zusammen mit einem Nachgerät 4, insbesondere einer Sämaschine, benutzt werden, die dann bei 86 und 93 an den Karren 3' angebaut ist, wie dies Fig. 5 zeigt. Allerdings ist dann der Karren 3' auf den Boden B abgelassen. Die Kette 90, die am Ende des Balkens 22'b bei 94 und an den Unterlenkern 61 bei 95 angehängt ist, ist dann locker.In der Arbeitsstellung ist auch die Anschlagkette 82 lokker, so daß das freie Spiel der Kreiselegge nicht behindert ist.

Beim Übergang in die Transportstellung werden die Unterlenker 15 mit der Hebehydraulik des Schleppers angehoben, wobei der Grubber 1 - schließlich die in Fig. 5 dargestellte Lage einnimmt. Der Grubber 1 ist in der Transportstellung nach vorne geneigt, hat also eine andere Lage als beim Kombinationsgerät K₁. Diese andere Lage rührt daher, daß der Turm 10' durch die Strebe 92 starr mit dem Gestell 5' verbunden ist, was eine Einstellung in eine horizontale Lage verhindert. Gleichzeitig mit dem Anheben des Vorgerätes 1 oder auch mit zeitlicher Verzögerung wird der Hydraulikzylinder 62 mit Drucköl beaufschlagt, wodurch seine Kolbenstange 62b in den Zylinderteil 62a eingezogen wird. Dadurch wird der Karren 3' relativ zur Kreiselegge 2 nach unten gedrückt bzw. nach Abstützung der Nachlauf räder 38, 39 auf dem Boden B die Kreiselegge 2 angehoben. Durch die Anhebebewegung der Kreiselegge 2 gelangt der Balken 22' in eine Lage, in der die Kette 90 - schließlich gespannt ist, so daß bei weiterem Anheben die Unterlenker 91 nach oben gezogen und das Nachgerät 4 dadurch angehoben wird. Ein besonderer Hydraulikzylinder für die Anhebung des Nachgerätes 4 ist also beim Kombinationsgerät K₂ nicht vorgesehen.

Der Übergang von der Transportstellung nach Fig. 5 in die Arbeitsstellung läuft umgekehrt ab, wie der Übergang von der Arbeitsstellung in die Transportstellung.

Wenn das Gerät als Anbaugerät, d.h. ohne Karren 3', verwendet wird, wird die Kette 82 zur Wirkung gebracht. Diese wird nach einem gewissen Anhebeweg des Vorgerätes 1 gespannt, wodurch auch die Kreiselegge 2 angehoben wird.

## Ansprüche

1. Kombinationsgerät (K₁; K₂) für die Bodenbearbeitung in der Landwirtschaft, mit einem Vorgerät (1), z. B. einem Bodenaufreißgerät, mit Kuppeleinrichtungen (10; 10') zum Anbau an die Hebevorrichtung (15) eines Schleppers, einem mit dem Vorgerät (1) über ein Dreipunktgestänge (27) verbundenes zweites Gerät (2) mit aktiv angetriebenen Werkzeugen (20), die vom Schlepper über eine Gelenkwelle antreibbar sind, insbesondere Saatbereitungsgerät in Form einer Bodenfräse oder Kreiselegge, und eine auf dem Boden mittels mindestens eines Nachlaufrades (38, 39) abstützbare Tragvorrichtung (3; 3') zum Tragen des Vorgerätes (1) und des zweiten Gerätes (2) während des Transportes, dadurch gekennzeichnet, daß die Tragvorrichtung ein hinter dem zweiten Gerät (2) angeordneter, mittels eines Dreipunktgestänges - (29; 89) lösbar mit diesem verbundener Karren (3; 3') ist, an dem sich Kupplungsstellen (49, 46; 86, 93) für den Anschluß eines Nachgerätes (4), insbesondere einer Sämaschine, befinden, wobei das Dreipunktgestänge (29; 89) hydraulisch betätigbar ist.

2. Kombinationsgerät nach einem der vorhergehenden Ansprüche, dadurch gekennzeichnet, daß das Vorgerät (1) mittels eines Dreipunktgestänges (36) mit dem Schlepper verbindbar ist.

3. Kombinationsgerät nach einem der vorhergehenden Ansprüche, dadurch gekennzeichnet, daß die Kupplungsstellen (49, 45; 86, 93) für den Anschluß des Nachgerätes Kupplungsstellen eines Dreipunktgestänges (33; 88) sind.

4. Kombinationsgerät nach einem der vorhergehenden Ansprüche, dadurch gekennzeichnet, daß das zweite Gerät (2) mit dem Vorgerät (1) über ein Dreipunktgestänge (28; 75) verbunden ist.

5. Kombinationsgerät nach einem der vorhergehenden Ansprüche, dadurch gekennzeichnet, daß das zweite Gerät (2) in der Arbeitsstellung relativ zum Vorgerät (1) frei höhenbeweglich ist und daß beim Anheben des Vorgerätes (1) ein Anschlag (67; 82) wirksam wird, der das Absenken des zweiten Gerätes (2) relativ zum Vorgerät (1) verhindert, so daß das zweite Gerät (2) mit dem Vorgerät (1) zusammen angehoben wird.

6. Kombinationsgerät nach Anspruch 5, dadurch gekennzeichnet, daß der Anschlag durch das Ende (67a) einer Stellschraube (67) gebildet ist.

7. Kombinationsgerät nach Anspruch 5, dadurch gekennzeichnet, daß der Anschlag in eine Wirkstellung und in eine Ruhestellung bringbar ist, z. B. als Kette (82) ausgebildet ist, deren wirksame Länge durch Einhängen verschiedener Kettenglieder veränderbar ist, oder der durch Aushängen der Kette in eine unwirksame Stellung bringbar ist.

8. Kombinsationsgerät nach einem der vorhergehenden Ansprüche, dadurch gekennzeichnet, daß das Nachgerät (4) mittels eines Hydraulikzylinders (52) relativ zum Karren (3) anhebbar ist.

9. Kombinationsgerät nach Anspruch 8, dadurch gekennzeichnet, daß der Hydraulikzylinder (52) in ein Dreipunktgestänge (33) für die Verbindung des Nachgerätes (4) mit dem Karren (3) eingebaut ist.

10. Kombinationsgerät nach Anspruch 8 und eventuell 9, gekennzeichnet durch eine Folgeschaltung der beiden Hydraulikzylinder (62, 52) derart, daß zuerst das zweite Gerät (2) und danach das Nachgerät (4) relativ zum Karren (3) angehoben wird.

11. Kombinationsgerät nach einem der vorhergehenden Ansprüche, dadurch gekennzeichnet, daß der Karren (3; 3') in der Arbeitsstellung relativ zum zweiten Gerät (2) anhebbar ist, beispielsweise mittels eines Hydraulikzylinders (62), der zugleich zur Verriegelung gemäß Anspruch 9 dient.

12. Kombinationsgerät nach einem der vorhergehenden Ansprüche, dadurch gekennzeichnet, daß das Nachgerät (4) mechanisch mit dem zweiten Gerät (2) oder dem Vorgerät so verbunden ist, z. B. über ein Zugelement, wie eine Kette (90), daß beim Ausheben der vor dem Karren (3') liegenden Geräte (1, 2) das Nachgerät (4) angehoben wird.

13. Kombinationsgerät nach einem der vorhergehenden Ansprüche, dadurch gekennzeichnet, daß der Pol eines Gelenkviereckes, insbesondere eines Dreipunktgestänges (75), mit dem das zweite Gerät (2) mit dem Vorgerät (1) verbunden ist, etwa am vorderen Ende des Gestells (5') des Vorgerätes (1) liegt.

14. Kombinationsgerät nach einem der vorhergehenden Ansprüche, dadurch gekennzeichnet, daß ein Turm (10) am Vorgerät (1) der für den Anschluß des oberen Lenkers (13) eines Schlepper-Dreipunktgestänges (36) bestimmt ist, gegenüber dem Gestell (5) des Vorgerätes (1) schwenkbar und mittels einer Strebe (12) am Gestell (5) abgestützt ist, die eine Lose enthält, z. B. einen Schlitz (71), wobei in der Arbeitsstellung die Schwenkbewegung des Turmes (10) nach hinten und in der Transportstellung die Schwenkbewegung des Turmes (10) nach vorne begrenzt ist.

15. Kombinationsgerät nach einem der vorhergehenden Ansprüche, dadurch gekennzeichnet, daß ein oberer Lenker (68; 76) eines Dreipunktgestänges (27; 75), mit dem das zweite Gerät (2) an das Vorgerät (1) angeschlossen ist, eine Lose enthält, z. B. einen Schlitz (70; 79), wobei sich der obere Lenker (68; 76) während der Arbeitsstellung im Bereich der Lose (70, 79) bewegt und in der Transportstellung auf Druck beansprucht ist.

16. Gerät für die Bodenbearbeitung in der Landwirtschaft, insbesondere Saatbettbereitungsgerät in Form einer Bodenfräse oder Kreiselegge ( 2) insbesondere nach einem oder mehreren der vorhergehenden Ansprüche, dadurch gekennzeichnet, daß an der Rüchseite des Gerätes ein Karren - (3; 3') mit mindestens einem Nachlaufrad (38, 39) angeordnet ist, der mit dem Gerät über ein hydraulisch betätigbares Dreipunktgestänge (29;

89) gekuppelt ist und daß an dem Karren (3; 3') Kupplungsstellen für den Anschluß eines Nachgerätes (4) angeordnet sind.

8

_Fig.1_

Fig.2

Fig.3

Fig.4

Fig.5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y,D | DE-A-3 033 848 (RABEWERK HEINRICH CLAUSING) * Ansprüche 1,13,27; Abbildungen 2 und 3 * | 1,2 | A 01 B 49/00 A 01 B 63/00 |
| A | | 5,7,12 | |
| | --- | | |
| Y | FR-A-2 418 993 (ETS. JEAN FAOU) * Ansprüche 2 und 3; Abbildungen * | 1,2 | |
| A | | 3,4 | |
| | --- | | |
| A | GB-A-2 137 462 (VAN DER LELY) * Zusammenfassung; Abbildungen 1 und 2 * | 1-4,11,16 | |
| | --- | | RECHERCHIERTE SACHGEBIETE (Int. Cl.4) |
| A | FR-A-2 503 979 * Ansprüche 1-5; Abbildungen 1 und 2 * | 1-4,16 | A 01 B |
| | --- | | |
| A | FR-A-2 034 125 (HUARD-USF S.A.) * Seite 2, Zeilen 17-25; Seite 1, Zeilen 1-13; Abbildung 4 * | 1-9,16 | |
| | --- -/- | | |

Der vorliegende Recherchenbericht wurde für alle Patentansprüche erstellt.

| Recherchenort DEN HAAG | Abschlußdatum der Recherche 19-02-1986 | Prüfer VON ARX V.U. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82

## EINSCHLÄGIGE DOKUMENTE

Seite 2

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | FR-A-2 549 340   (AMAZONENWERKE) <br><br> * Seite 1, Zeilen 3-11; Ansprüche 1-11; Abbildungen 3 und 5 * | 2,3,4, 8,9,13 | |
| | --- | | |
| A | US-A-2 722 875  (CLARENCE RICHEY) <br> * Spalte 1, Zeilen 46-54 * | 10 | |
| | ----- | | |

RECHERCHIERTE SACHGEBIETE (Int. Cl.4)

Der vorliegende Recherchenbericht wurde für alle Patentansprüche erstellt.

| Recherchenort <br> DEN HAAG | Abschlußdatum der Recherche <br> 19-02-1986 | Prüfer <br> VON ARX V.U. |
|---|---|---|